# DEMANDE DE BREVET EUROPEEN

(11) **EP 2 178 286 A1**
(43) Date de publication de la demande: **21.04.2010**
(21) Numéro de dépôt: 08290962.3
(22) Date de dépôt: 14.10.2008
(51) Int. Cl.: H04M 3/42, H04M 1/73, H04M 1/725, H04W 52/02, H04L 29/08, H04W 4/18, H04W 8/22

(54) **Méthode de gestion de la delivrance de contenus spontanes à un terminal de télécommuniciation mobile et équipements associés**

(71) Demandeur: Alcatel Lucent, 75008 Paris (FR)
(72) Inventeur: Senot, Christophe, 75013 Paris (FR); Aghasaryan, Armen, 91600 Savigny sur Orge (FR); Betge-Brezetz, Stéphane, 75015 Paris (FR); Toms, Yann, 75014 Paris (FR)
(74) Mandataire: Croonenbroek, Thomas Jakob

(57) **Abrégé**

La présente invention concerne une méthode de gestion de la délivrance d'au moins un contenu spontané à un utilisateur d'un terminal de télécommunication mobile dans laquelle la nature dudit contenu spontané et le moment de ladite délivrance sont déterminés en fonction, d'une part, d'au moins un premier paramètre lié à la consommation d'énergie dudit terminal de télécommunication mobile pour réaliser ladite délivrance et, d'autre part, d'au moins un second paramètre lié au niveau d'énergie disponible dudit terminal de télécommunication mobile.

## Description

La présente invention fait partie du domaine des réseaux de télécommunication mobile et plus particulièrement de la gestion de contenus spontanés destinés à être diffusés sur les terminaux des utilisateurs de ce réseau de télécommunication mobile.
Le développement technique des terminaux de télécommunication mobile permet aujourd'hui l'apparition de la diffusion de contenus publicitaires ou commerciaux. Ces contenus sont envoyés par le biais du réseau aux différents terminaux. Ce moyen permettant de toucher la quasi-totalité de la population de manière individualisée, on peut penser que le volume de contenus publicitaires ne va cesser de croître et va même se généraliser dans les années à venir.
Néanmoins, ces contenus pourraient avoir des effets néfastes pour les utilisateurs comme le déchargement prématuré de la batterie qui pourrait être dû à la diffusion de ces contenus.

C'est donc un objet de la présente invention de surmonter les inconvénients précités de l'état de la technique et de fournir une méthode permettant de limiter ou d'adapter la diffusion de contenus publicitaires lorsque le niveau de charge de la batterie du terminal de télécommunication mobile est insuffisant. Cette invention décrit plus spécifiquement le cas de contenus publicitaires, mais peut facilement être étendue à tous types de contenus multimédia.

A cet effet, l'invention concerne une méthode de gestion de la délivrance d'au moins un contenu spontané à un utilisateur d'un terminal de télécommunication mobile dans laquelle la nature dudit contenu spontané et le moment de ladite délivrance sont déterminés en fonction, d'une part, d'au moins un premier paramètre lié à la consommation d'énergie dudit terminal de télécommunication mobile pour réaliser ladite délivrance et, d'autre part, d'au moins un second paramètre lié au niveau d'énergie disponible dudit terminal de télécommunication mobile.

Selon un premier mode de réalisation, la délivrance d'au moins un contenu spontané à un utilisateur d'un terminal de télécommunication mobile comprend les étapes de:
- téléchargement et enregistrement sur ledit terminal de télécommunication dudit au moins un contenu spontané,
- diffusion dudit au moins un contenu spontané audit utilisateur, lesdites étapes étant réalisées en fonction d'un premier et d'un deuxième jeu de paramètres si au moins un paramètre lié au niveau d'énergie disponible dudit terminal de télécommunication mobile est supérieure à une valeur prédéfinie.

Selon un mode de réalisation supplémentaire, les étapes de téléchargement-enregistrement et de diffusion sont réalisées à des moments distincts et les valeurs prédéfinies dudit au moins un paramètre lié au niveau d'énergie disponible dudit terminal de télécommunication mobile sont différentes pour les deux étapes.

Selon un autre mode de réalisation, la consommation d'énergie relative à la délivrance dudit au moins un contenu spontané est estimée en fonction des caractéristiques techniques du terminal de télécommunication mobile et d'au moins une des propriétés dudit au moins un contenu spontané.

Selon un mode de réalisation additionnel, les propriétés dudit au moins un contenu spontané comprennent:
- le type dudit au moins un contenu spontané,
- la durée dudit au moins un contenu spontané,
- la taille dudit au moins un contenu spontané.

Selon un mode de réalisation supplémentaire, la qualité de réception radio du terminal de télécommunication mobile est prise en compte afin de déterminer le moment du téléchargement dudit au moins un contenu spontané.

Selon un autre mode de réalisation, le mode de diffusion d'un contenu spontané peut être modifié en fonction d'un paramètre lié au niveau d'énergie du terminal de télécommunication mobile.

Selon un mode de réalisation additionnel, la diffusion d'un contenu spontané peut se faire dans un mode dégradé si le niveau d'énergie du terminal de communication mobile disponible est inférieur à une valeur prédéfinie.

Selon un mode de réalisation supplémentaire, la méthode de gestion comprend les étapes suivantes:
- déterminer l'énergie nécessaire au téléchargement d'un contenu spontané,
- déterminer le niveau d'énergie disponible du terminal de télécommunication mobile,
- déterminer le niveau d'énergie nécessaire pour télécharger ledit contenu spontané,
- télécharger un contenu spontané si le niveau d'énergie est suffisant pour télécharger ledit contenu spontané,
- stocker ledit contenu spontané en mémoire,
- déterminer l'énergie nécessaire à la diffusion dudit contenu spontané,
- diffuser ledit contenu spontané si le niveau d'énergie disponible du terminal de télécommunication mobile est suffisant pour diffuser ledit contenu spontané.

La présente invention concerne également un terminal de télécommunication mobile comprenant au moins un moyen de traitement capable de réaliser les étapes suivantes:
- déterminer l'énergie nécessaire au téléchargement d'un contenu spontané,
- déterminer le niveau d'énergie disponible du terminal de télécommunication mobile,
- déterminer le niveau d'énergie nécessaire pour télécharger ledit contenu spontané,
- télécharger un contenu spontané si le niveau d'énergie est suffisant pour télécharger ledit contenu spontané,
- stocker ledit contenu spontané en mémoire,
- déterminer l'énergie nécessaire à la diffusion dudit contenu spontané,
- diffuser ledit contenu spontané si le niveau d'énergie disponible du terminal de télécommunication mobile est suffisant pour diffuser ledit contenu spontané.

Selon un mode de réalisation additionnel, le terminal de télécommunication mobile comprend au moins un moyen de traitement capable de réaliser l'étape supplémentaire suivante:
- supprimer le contenu spontané de la mémoire du terminal de télécommunication mobile après un nombre prédéterminé de diffusions.

La présente invention concerne également un serveur de télécommunication mobile comprenant au moins un moyen de traitement capable de réaliser les étapes suivantes:
- sélectionner au moins un contenu spontané à délivrer à un utilisateur d'un terminal de télécommunication mobile,
- estimer la consommation d'énergie relative à la délivrance dudit au moins un contenu spontané en fonction des caractéristiques techniques dudit terminal de télécommunication mobile et d'au moins une des propriétés dudit au moins un contenu spontané.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins:
- la figure 1 est un schéma représentant un exemple d'architecture de la présente invention;
- la figure 2 est un exemple de tableau des capacités;
- la figure 3 est un schéma synoptique représentant les différentes étapes de la présente invention;

Le terme « terminal de télécommunication mobile » correspond à tout type d'équipement capable de recevoir des contenus d'un réseau de télécommunication et capable d'échanger des données, messages et requêtes avec ce même réseau comme par exemple un téléphone portable, un ordinateur portable ou un assistant personnel numérique (PDA)

Le terme « contenu spontané » correspond à un ensemble de données définissant, par exemple, une image, un programme vidéo ou audio. Un tel contenu peut être délivré de manière indépendante, en agrégation avec un autre contenu ou encore en association avec une application. Le format de ces contenus peut être adapté aux caractéristiques techniques (matérielles ou logicielles) du terminal.

Les différents éléments du dispositif selon l'invention vont maintenant être décrits plus en détail en référence aux figures. Sur ces figures, les éléments identiques portent les mêmes numéros de référence.

L'idée principale de la présente invention est de déterminer la nature et le moment de la diffusion d'un contenu spontané à un utilisateur à partir d'un terminal mobile en fonction des caractéristiques dudit contenu spontané et du niveau d'énergie disponible au niveau dudit terminal mobile. Ce niveau d'énergie disponible peut correspondre, par exemple, au niveau de charge de la batterie ou de l'accumulateur du terminal mobile ou à la mise en charge du terminal.

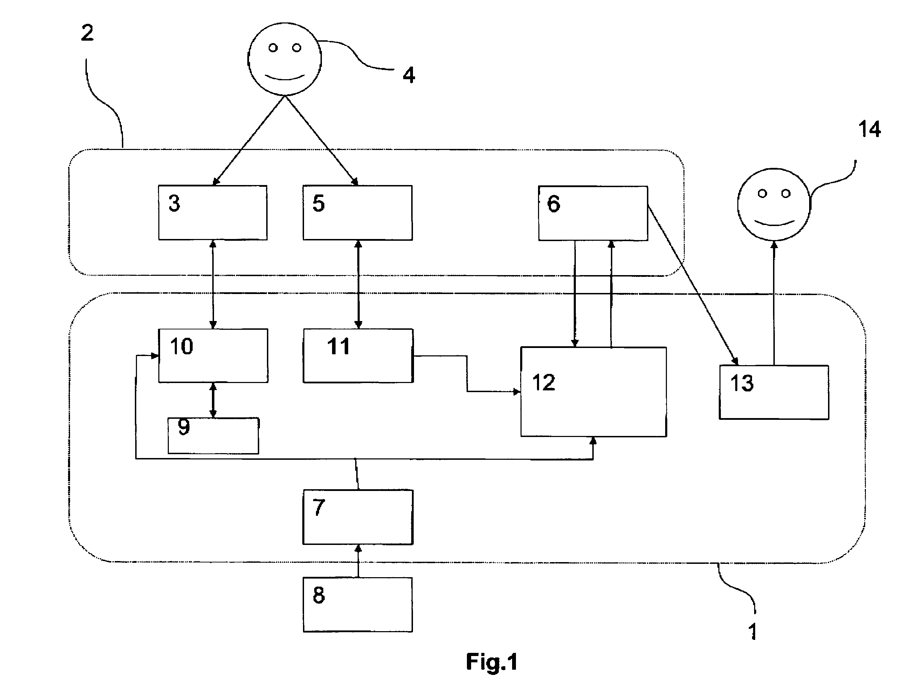

La figure 1 présente l'organisation des différents modules d'un exemple de réalisation de la présente invention. Les différents modules peuvent être divisés en deux groupes, ceux localisés au niveau du terminal mobile 1 et ceux localisés au niveau de l'opérateur réseau 2. L'opérateur réseau 2 comprend les modules suivants:
- un emplacement de stockage 3 de contenus spontanés. Ce module garde en mémoire et organise les contenus spontanés fournis par les annonceurs et transmis par l'administrateur réseau 4. Les contenus spontanés peuvent être de divers formes comme par exemple des images, des vidéos, des textes défilants, un message vocal, etc. ... Il contient aussi des métadonnées décrivant les contenus spontanés. Ces métadonnées comprennent par exemple la taille, la durée ou le public cible desdits contenus spontanés;
- un gestionnaire de capacité 5 qui permet, grâce aux données fournies par l'administrateur réseau 4, d'estimer la consommation d'énergie engendrée par une action spécifique du terminal mobile 1 comme par exemple jouer une vidéo ou un message vocal, afficher une image...

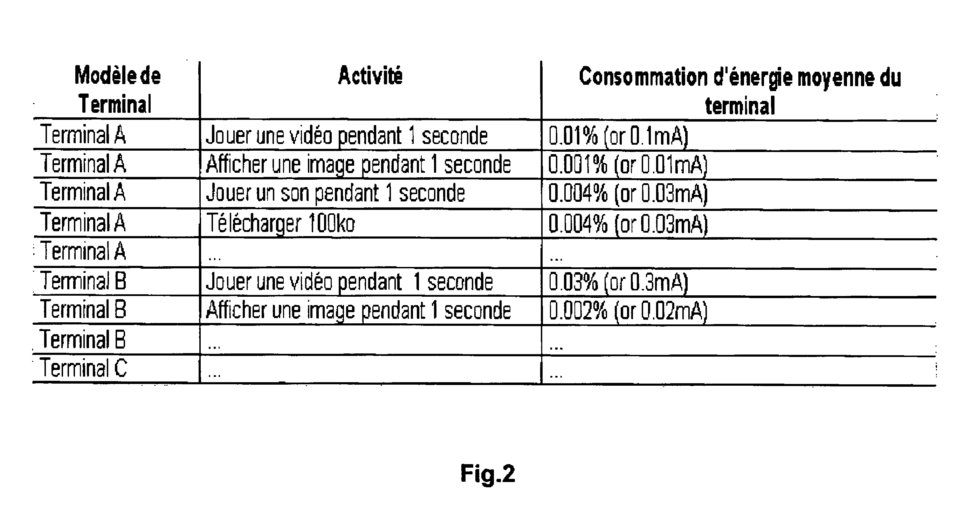

   La figure 2 décrit un exemple de règles de capacité fournies par l'administrateur réseau 4 au gestionnaire de capacité 5. Ces règles de capacité permettent de définir les actions dont le terminal mobile est capable en fonction de l'énergie disponible, c'est à dire en fonction du niveau de charge de la batterie. La première colonne du tableau correspond au modèle de terminal, la deuxième colonne à l'activité réalisée et la troisième colonne à la consommation correspondant à l'activité et au modèle de terminal. Ainsi, grâce à ces données, le gestionnaire de capacité 5 peut déterminer l'énergie requise à la diffusion d'un contenu spontané et ainsi prévoir l'influence de la diffusion d'un contenu spontané par le terminal mobile 1 sur le niveau de charge de la batterie;
- un sélectionneur de contenus spontanés 6 qui détermine en fonction de critères filtrants transmis par le terminal 1 les contenus spontanés à délivrer à l'utilisateur 14. D'autres critères que ceux fournis par le terminal (et décrits dans la présente invention) peuvent être pris en compte par le sélectionneur de contenus spontanés 6. La sélection des contenus spontanés peut, par exemple, être réalisée en fonction des intérêts de l'utilisateur ou de ses habitudes. Dans ce cas, le sélectionneur de contenus spontanés 6 prendra en compte l'ensemble des critères fournis pour déterminer le moment et la nature du contenu spontané à diffuser. Il est également à noter que dans un autre exemple de réalisation, le sélectionneur de contenus spontanés 6 pourrait être localisé au niveau du terminal mobile 1.

Le terminal mobile 1 comprend également plusieurs modules:
- un moniteur de batterie 7 relié à la batterie 8 du terminal mobile 1 permettant de déterminer le niveau d'énergie instantané de la batterie 8 et les capacités restantes. Ce moniteur de batterie 7 peut également déterminer une tendance de consommation en fonction de données précédentes, comme par exemple un historique de consommation. Ce module détecte aussi si le terminal est en charge;
- une base de données locale 9 des contenus spontanés permettant de stocker les contenus spontanés au niveau du terminal;
- un gestionnaire de téléchargement 10 relié au moniteur de batterie 7. En fonction du niveau de charge de la batterie 8 ou de la mise en charge du terminal mobile 1, le gestionnaire de téléchargement 9 détermine le meilleur moment pour télécharger les contenus spontanés situés au niveau de l'emplacement de stockage 3 et les sauvegarder au niveau de la base de données locale 9. Le gestionnaire de téléchargement 10 organise aussi la base de données locale en supprimant par exemple les contenus spontanés qui ont atteint leur nombre de diffusions maximum déterminé par l'opérateur ou l'annonceur ou qui sont trop anciens;
- un agent d'installation 11 qui collecte les caractéristiques du terminal à partir du gestionnaire de capacité 5 et les transforme en règles locales de capacité à suivre pour déterminer si un contenu spontané peut être délivré;
- un générateur de critères filtrants 12 relié aux autres modules du terminal mobile 1 précédemment décrits. Le but de ce module est de créer un ensemble de critères filtrants en prenant en compte le niveau de charge de la batterie 8, les contenus spontanés disponibles dans la base de données locale 9 et les règles locales de capacité. Ces critères filtrants permettent de déterminer les contenus spontanés qui peuvent être délivrés à l'utilisateur 14 par le terminal mobile 9. Ces critères sont transmis au sélectionneur de contenus spontanés 6;
- un module de diffusion 13 permettant de diffuser un contenu spontané sélectionné par le sélectionneur de contenus spontanés 6.

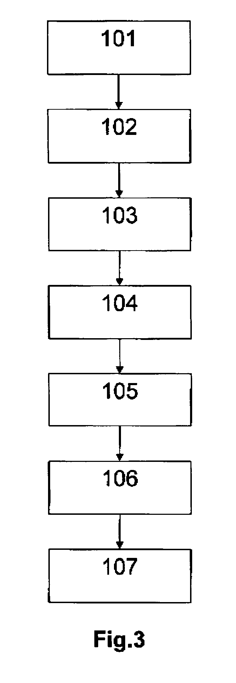

Les différentes étapes de la présente invention vont maintenant être décrite en référence à la figure 3.
Les premières étapes concernent la configuration du terminal mobile 1. Lors du premier lancement de l'application, l'agent d'installation 11 récupère toutes les règles de capacité nécessaires à partir du gestionnaire de capacité 5 et sélectionne celles correspondant au modèle du terminal de télécommunication mobile 1 (101) puis les transmet au générateur de critères filtrants 12 (102). Cette étape n'est réalisée qu'une fois, car les caractéristiques du terminal sont considérées comme stable.
Les étapes suivantes concernent le téléchargement des contenus spontanés. Lorsque le terminal mobile 1 est en charge ou lorsque le niveau de charge de la batterie est supérieur à un niveau prédéfini, le gestionnaire de téléchargement 10 détecte cette situation (103) et rentre en communication avec l'emplacement de stockage 3 afin d'effectuer le téléchargement des contenus spontanés disponibles (104). Lorsqu'il détecte des ressources d'énergie suffisantes, le gestionnaire de téléchargement 10 peut également lancer la diffusion de contenus spontanés qui consomment le plus, notamment sur un écran en veille du terminal mobile 1.
Les dernières étapes concernent le processus de sélection des contenus spontanés. Lorsque l'utilisateur se sert de son terminal mobile, la diffusion d'un contenu spontané peut être demandée par un service à distance ou une application locale (105). Le générateur de critères filtrants 12 est alors interrogé (106). Ce dernier prend alors en compte les règles de capacité du terminal mobile 1, le niveau d'énergie de la batterie 8, la tendance/prévision de consommation énergétique et les caractéristiques du contenu spontané afin d'autoriser la diffusion de celui-ci (107). Si le contenu spontané existe sous divers formes (vidéo, image ou message vocal), le générateur de critères filtrants 12 peut alors déterminer le format le plus adapté en fonction du niveau de charge de la batterie 8. Par exemple, en cas de batterie faible, une image sera diffusée au lieu d'un message vidéo. Dans le cas où le niveau de charge de la batterie serait inférieur à un niveau prédéterminé, la diffusion des contenus spontanés pourra être suspendue de manière à permettre à l'utilisateur de passer un appel ou envoyer un message malgré le faible niveau de charge de la batterie.

Selon un autre mode de réalisation, la diffusion d'un contenu spontané peut se faire en mode dégradé si le niveau de charge de la batterie 8 est insuffisant pour permettre la diffusion dans un mode normal. Le mode dégradé d'une vidéo correspondra à la même vidéo mais avec une qualité d'image et sonore inférieure. En effet, une vidéo sans son ou ayant un nombre réduit de pixels et dont la partie audio est encodée avec une qualité moindre requerra moins d'énergie. Ainsi, une diffusion en mode dégradé permettra de diffuser le contenu spontané désiré par l'opérateur réseau 2 tout en préservant le niveau d'énergie de la batterie 8. Différents niveaux de dégradation peuvent exister et le sélectionneur de contenus spontanés 6 sélectionnera alors en fonction des critères filtrants la qualité de diffusion adaptée au niveau d'énergie disponible.
Afin de mieux comprendre l'invention, un exemple concret va être développé dans la suite de la description. Dans cet exemple, un annonceur désire lancer une campagne de promotion d'un nouveau film. Dans ce cas, le contenu spontané sera donc la bande-annonce du film. Dans un premier temps, lorsque que le terminal mobile 1 est en charge, la bande-annonce ou plus généralement les différents fichiers correspondant aux différentes versions de la bande-annonce sont téléchargés par le gestionnaire de téléchargement 10 sur le terminal mobile 1. En fonction du format des fichiers et de leur taille, la capacité requise, c'est-à-dire l'énergie nécessaire, pour leur diffusion est alors déterminé par le gestionnaire de capacité 5. Le moment de la diffusion peut-être choisi par l'annonceur, par exemple la veille de la sortie en salle du film, ou déterminé automatiquement en fonction des habitudes de l'utilisateur, par exemple si l'utilisateur a l'habitude d'aller au cinéma le week-end, la bande-annonce pourra être diffusée le vendredi. Si, au moment de la diffusion, la batterie 8 du terminal mobile 1 est trop faible par rapport à la capacité requise pour la diffusion de la version normale, la bande-annonce pourra, en fonction des désirs de l'annonceur et/ou de l'utilisateur, soit être suspendue et diffusée ultérieurement lorsque la batterie sera rechargée soit diffusée en version dégradée soit remplacée par la diffusion de l'affiche du film sur l'écran du terminal mobile.

Ainsi, la présente invention permet d'ajuster le type de contenus spontanés et le moment du téléchargement et de la diffusion de ces contenus spontanés en fonction du niveau de charge de la batterie 8 du terminal mobile 1 et permet ainsi, en cas de niveau de charge de batterie faible, d'économiser l'énergie nécessaire à la diffusion de contenus spontanés afin de la préserver en vue d'un éventuel appel ou d'une éventuelle utilisation impérieuse du téléphone par l'utilisateur. Ainsi, la présente invention permet également aux opérateurs de mieux faire accepter la diffusion de contenus spontanés aux utilisateurs, ces derniers pouvant être réticents envers ces diffusions si elles entraînaient une décharge prématurée de la batterie de leur terminal mobile les empêchant, par exemple, de passer un appel urgent.

## Revendications

1. Méthode de gestion de la délivrance d'au moins un contenu spontané à un utilisateur (14) d'un terminal de télécommunication mobile (1) dans laquelle la nature dudit contenu spontané et le moment de ladite délivrance sont déterminés en fonction, d'une part, d'au moins un premier paramètre lié à la consommation d'énergie dudit terminal de télécommunication mobile (1) pour réaliser ladite délivrance et, d'autre part, d'au moins un second paramètre lié au niveau d'énergie disponible dudit terminal de télécommunication mobile (1).

2. Méthode de gestion selon la revendication 1 dans laquelle la délivrance d'au moins un contenu spontané à un utilisateur (14) d'un terminal de télécommunication mobile (1) comprend les étapes de:
- téléchargement et enregistrement sur ledit terminal de télécommunication (1) dudit au moins un contenu spontané,
- diffusion dudit au moins un contenu spontané audit utilisateur (14), lesdites étapes étant réalisées en fonction d'un premier et d'un deuxième jeu de paramètres si au moins un paramètre lié au niveau d'énergie disponible dudit terminal de télécommunication mobile (1) est supérieure à une valeur prédéfinie.

3. Méthode de gestion selon la revendication 2 dans laquelle les étapes de téléchargement-enregistrement et de diffusion sont réalisées à des moments distincts et les valeurs prédéfinies dudit au moins un paramètre lié au niveau d'énergie disponible dudit terminal de télécommunication mobile (1) sont différentes pour les deux étapes.

4. Méthode de gestion selon l'une des revendications précédentes dans laquelle la consommation d'énergie relative à la délivrance dudit au moins un contenu spontané est estimée en fonction des caractéristiques techniques du terminal de télécommunication mobile (1) et d'au moins une des propriétés dudit au moins un contenu spontané.

5. Méthode de gestion selon la revendication 4 dans laquelle les propriétés dudit au moins un contenu spontané comprennent:
- le type dudit au moins un contenu spontané,
- la durée dudit au moins un contenu spontané,
- la taille dudit au moins un contenu spontané.

6. Méthode de gestion selon l'une des revendications 2 à 5 dans laquelle la qualité de réception radio du terminal de télécommunication mobile (1) est prise en compte afin de déterminer le moment du téléchargement dudit au moins un contenu spontané.

7. Méthode de gestion selon l'une des revendications 2 à 6 dans laquelle le mode de diffusion d'un contenu spontané peut être modifié en fonction d'un paramètre lié au niveau d'énergie du terminal de télécommunication mobile (1).

8. Méthode de gestion selon l'une des revendications 2 à 7 dans laquelle la diffusion d'un contenu spontané peut se faire dans un mode dégradé si le niveau d'énergie du terminal de communication mobile (1) disponible est inférieur à une valeur prédéfinie.

9. Méthode de gestion selon l'une des revendications précédentes comprenant les étapes suivantes:
- déterminer l'énergie nécessaire au téléchargement d'un contenu spontané,
- déterminer le niveau d'énergie disponible du terminal de télécommunication mobile (1),
- déterminer le niveau d'énergie nécessaire pour télécharger ledit contenu spontané,
- télécharger un contenu spontané si le niveau d'énergie est suffisant pour télécharger ledit contenu spontané,
- stocker ledit contenu spontané en mémoire,
- déterminer l'énergie nécessaire à la diffusion dudit contenu spontané,
- diffuser ledit contenu spontané si le niveau d'énergie disponible du terminal de télécommunication mobile est suffisant pour diffuser ledit contenu spontané.

10. Terminal de télécommunication mobile (1) comprenant au moins un moyen de traitement capable de réaliser les étapes suivantes:
- déterminer l'énergie nécessaire au téléchargement d'un contenu spontané,
- déterminer le niveau d'énergie disponible du terminal de télécommunication mobile (1),
- déterminer le niveau d'énergie nécessaire pour télécharger ledit contenu spontané,
- télécharger un contenu spontané si le niveau d'énergie est suffisant pour télécharger ledit contenu spontané,
- stocker ledit contenu spontané en mémoire,
- déterminer l'énergie nécessaire à la diffusion dudit contenu spontané,
- diffuser ledit contenu spontané si le niveau d'énergie disponible du terminal de télécommunication mobile est suffisant pour diffuser ledit contenu spontané.

11. Terminal de télécommunication mobile selon la revendication 9 comprenant au moins un moyen de traitement capable de réaliser l'étape supplémentaire suivante:
- supprimer le contenu spontané de la mémoire du terminal de télécommunication mobile (1) après un nombre prédéterminé de diffusions.

12. Serveur de télécommunication mobile (2) comprenant au moins un moyen de traitement capable de réaliser les étapes suivantes:
- sélectionner au moins un contenu spontané à délivrer à un utilisateur (14) d'un terminal de télécommunication mobile (1),
- estimer la consommation d'énergie relative à la délivrance dudit au moins un contenu spontané en fonction des caractéristiques techniques dudit terminal de télécommunication mobile (1) et d'au moins une des propriétés dudit au moins un contenu spontané.

## Revendications modifiées

### Revendications modifiées conformément à la règle 137(2) CBE.

**1.** Méthode de gestion de la délivrance d'au moins un contenu spontané à un utilisateur (14) d'un terminal de télécommunication mobile (1) dans laquelle la nature dudit contenu spontané et le moment de ladite délivrance sont déterminés en fonction, d'une part, d'au moins un premier paramètre lié à la consommation d'énergie dudit terminal de télécommunication mobile (1) pour réaliser ladite délivrance et, d'autre part, d'au moins un second paramètre lié au niveau d'énergie disponible dudit terminal de télécommunication mobile (1), ladite délivrance comprenant les étapes de:
- téléchargement et enregistrement sur ledit terminal de télécommunication (1) dudit au moins un contenu spontané,
- diffusion dudit au moins un contenu spontané audit utilisateur (14), lesdites étapes étant réalisées en fonction d'un premier et d'un deuxième jeu de paramètres si au moins un paramètre lié au niveau d'énergie disponible dudit terminal de télécommunication mobile (1) est supérieure à une valeur prédéfinie
et dans laquelle la diffusion d'un contenu spontané peut se faire dans un mode dégradé si le niveau d'énergie du terminal de communication mobile (1) disponible est inférieur à une valeur prédéfinie.

**2.** Méthode de gestion selon la revendication 1 dans laquelle les étapes de téléchargement-enregistrement et de diffusion sont réalisées à des moments distincts et les valeurs prédéfinies dudit au moins un paramètre lié au niveau d'énergie disponible dudit terminal de télécommunication mobile (1) sont différentes pour les deux étapes.

**3.** Méthode de gestion selon l'une des revendications précédentes dans laquelle la consommation d'énergie relative à la délivrance dudit au moins un contenu spontané est estimée en fonction des caractéristiques techniques du terminal de télécommunication mobile (1) et d'au moins une des propriétés dudit au moins un contenu spontané.

**4.** Méthode de gestion selon la revendication 3 dans laquelle les propriétés dudit au moins un contenu spontané comprennent:
- le type dudit au moins un contenu spontané,
- la durée dudit au moins un contenu spontané,
- la taille dudit au moins un contenu spontané.

**5.** Méthode de gestion selon l'une des revendications précédentes dans laquelle la qualité de réception radio du terminal de télécommunication mobile (1) est prise en compte afin de déterminer le moment du téléchargement dudit au moins un contenu spontané.

**6.** Méthode de gestion selon l'une des revendications précédentes dans laquelle le mode de diffusion d'un contenu spontané peut être modifié en fonction d'un paramètre lié au niveau d'énergie du terminal de télécommunication mobile (1).

**7.** Méthode de gestion selon l'une des revendications précédentes comprenant les étapes suivantes:
- déterminer l'énergie nécessaire au téléchargement d'un contenu spontané,
- déterminer le niveau d'énergie disponible du terminal de télécommunication mobile (1),
- déterminer le niveau d'énergie nécessaire pour télécharger ledit contenu spontané,
- télécharger un contenu spontané si le niveau d'énergie est suffisant pour télécharger ledit contenu spontané,
- stocker ledit contenu spontané en mémoire,
- déterminer l'énergie nécessaire à la diffusion dudit contenu spontané,
- diffuser ledit contenu spontané si le niveau d'énergie disponible du terminal de télécommunication mobile est suffisant pour diffuser ledit contenu spontané.

**8.** Terminal de télécommunication mobile (1) comprenant au moins un moyen de traitement capable de réaliser les étapes suivantes:
- déterminer l'énergie nécessaire au téléchargement d'un contenu spontané,
- déterminer le niveau d'énergie disponible du terminal de télécommunication mobile (1),
- déterminer le niveau d'énergie nécessaire pour télécharger ledit contenu spontané,
- télécharger un contenu spontané si le niveau d'énergie est suffisant pour télécharger ledit contenu spontané,
- stocker ledit contenu spontané en mémoire,
- déterminer l'énergie nécessaire à la diffusion dudit contenu spontané,
- diffuser ledit contenu spontané si le niveau d'énergie disponible du terminal de télécommunication mobile est suffisant pour diffuser ledit contenu spontané.

**9.** Terminal de télécommunication mobile selon la revendication 8 comprenant au moins un moyen de traitement capable de réaliser l'étape supplémentaire suivante:
- supprimer le contenu spontané de la mémoire du terminal de télécommunication mobile (1) après un nombre prédéterminé de diffusions.

**10.** Serveur de télécommunication mobile (2) comprenant au moins un moyen de traitement capable de réaliser les étapes suivantes:
- sélectionner au moins un contenu spontané à délivrer à un utilisateur (14) d'un terminal de télécommunication mobile (1),
- estimer la consommation d'énergie relative à la délivrance dudit au moins un contenu spontané en fonction des caractéristiques techniques dudit terminal de télécommunication mobile (1) et d'au moins une des propriétés dudit au moins un contenu spontané.
